# EUROPÄISCHE PATENTSCHRIFT

(11) **EP 1 597 046 B1**
(45) Veröffentlichungstag und Bekanntmachung des Hinweises auf die Patenterteilung: **22.09.2010**
(21) Anmeldenummer: 04709609.4
(22) Anmeldetag: 10.02.2004
(51) Int. Cl.: B29C 33/52, B22C 9/10, C09D 1/00

(54) **BESCHICHTUNGSMASSEN FÜR GUSSKERNE**
COATING MATERIALS FOR CORES
SUBSTANCES DE REVETEMENT POUR NOYAUX DE COULEE

(30) Priorität: 11.02.2003 DE 10305612
(43) Veröffentlichungstag der Anmeldung: 23.11.2005
(73) Patentinhaber: Ashland-Südchemie-Kernfest GmbH, 42489 Wülfrath (DE)
(72) Erfinder: PITAMITZ, Herbert, 42113 Wuppertal (DE); LEDERER, Gernot, 40882 Mettmann (DE)
(74) Vertreter: Schupfner, Georg
(86) Internationale Anmeldenummer: PCT/EP2004/001219
(87) Internationale Veröffentlichungsnummer: WO 2004/071738

(56) Entgegenhaltungen:
- EP-A- 0 718 085
- WO-A-93/25365
- GB-A- 0 170 677
- GB-A- 1 036 068
- US-A- 3 501 320
- US-A- 3 692 551
- US-A- 4 667 727
- DATABASE WPI Section Ch, Week 199412 Derwent Publications Ltd., London, GB; Class A81, AN 1994-097224 XP002285278 & JP 06 047489 A (UBE IND LTD) 22. Februar 1994 (1994-02-22)

## Beschreibung

Seit einiger Zeit werden zur Herstellung gegossener oder spritzgegossener Metall- oder Kunststoffteile in verstärktem Maße Kerne aus wasserlöslichen Salzen eingesetzt. Ihr Vorteil gegenüber konventionellen Kernen liegt in der vorteilhaften Entkernung nach dem Gießvorgang, der insbesondere bei Kanalkernen zum Tragen kommt, die mittels Wasser und ohne zusätzliche thermische Belastung des gegossenen Produkts aus der Form ausgewaschen werden können.

Allerdings führt die bei der Herstellung solcher Salzkerne erforderliche Körnung der Salzpartikel zu einer nicht immer einheitlichen Oberflächenbeschaffenheit. Insbesondere kann es je nach Salzmorphologie zur Ausbildung einer großen Rauhtiefe der Oberfläche des Kerns kommen, die sich auf das zu erzeugende Werkstück übertragen würde und so einem unmittelbaren Einsatz des Salzkerns entgegensteht. Gemäß herkömmlicher Praxis werden die Salzkerne daher mit einer Beschichtungsmasse behandelt, um eine glatte Oberfläche des Gussstückes zu gewährleisten. Herkömmlicherweise beinhalten solche Beschichtungsmassen (Schlichten) wasserunlösliche, partikuläre Materialien, die als Füllstoffe zum Ausgleich vorhandener Oberflächenunebenheiten dienen. Sie neigen jedoch dazu, nach dem Entkernen der Form an der Gussoberfläche zu verbleiben und stellen dort einen potentiellen Risikofaktor bei der Anwendung des Gussteils dar.

US-A-3692551 offenbart ein Beschichtungverfahren für Kerne, wobei die Kerne in eine Salzschnelze getaucht werden Nach Entnahme aus dem Salzbad und Abkühlen entsteht eine einheitliche, glatte Beschichtung aus gehärtetem Salz.

Vor diesem Hintergrund war es die Aufgabe der Erfindung, eine verbesserte Beschichtungsmasse für Gusskerne bereitzustellen. Insbesondere sollte eine Beschichtungsmasse bereitgestellt werden, bei deren Verwendung die inhärenten Vorteile eines Salzkerns, wie die Möglichkeit einer leichten und vollständigen Entkernung, in vollem Umfang aufrechterhalten werden und die weitgehend rückstandsfrei aus der Form bzw. dem Gussteil zu entfernen ist.

Gelöst wurde diese Aufgabe mit Hilfe von Beschichtungsmassen gemäß Anspruch 1, die als partikulären Füllstoff mindestens ein wasserlösliches Salz beinhalten, das beim Vorrang des Entkernens ausgewaschen werden kann und somit nach dem Abguss keine Rückstände hinterlässt, welche die Morphologie der Gussoberfläche maßgeblich beeinflussen. Derartige Beschichtungsmassen kommen vorteilhafterweise auf Salzkernen zur Anwendung, wo sie nach dem Abguss gemeinsam mit dem Kern in einem Schritt durch Auswaschen entfernt werden können. Sie eignen sich jedoch auch zum Ausgleich von oberflächlichen Unregelmäßigkeiten auf Gusskernen, die selbst nicht wasserlöslich sind, wie beispielsweise Sandkerne. Auch in diesem Fall erleichtern die erfindungsgemäßen Massen die rückstandsfreie Entkernung.

Zum Einsatz als Füllstoffe in den erfindungsgemäßen Beschichtungsmassen eignen sich wasserlösliche Salze von Metallen sowohl der Haupt- als auch der Nebengruppen des Periodensystems, wobei der Begriff "Salz" auch Komplexsalze mit umfasst. Bevorzugt kommen als Kationen Metalle der ersten, zweiten und dritten Hauptgruppe zum Einsatz, aber auch Salze der Nebengruppenmetalle, soweit sie nicht aus Kosten- oder Toxizitätsgründen nachteilig sind. Insbesondere werden Salze bevorzugt, deren Kationen von Natrium, Kalium, Calcium, Magnesium, Eisen oder Aluminium gebildet werden. Daneben können auch wasserlösliche Verbindungen des Silicium, Zinn oder Blei verwendet werden.

Anionen der erfindungsgemäßen Füllstoffe können sowohl organischer als auch anorganischer Natur sein. Im praktischen Einsatz haben sich Sulfate, Hydrogensulfate, Halogenide wie Chloride und Bromide, Nitrate, Phosphate, Hydrogenphosphate, Carbonate oder Hydrogencarbonate, sowie Salze von Carbonsäuren, wie Acetate, Formiate oder Citrate, bewährt.

Besonders bevorzugt werden als wasserlösliche Salze Alkali- und Erdalkalimetallsalze, wie beispielsweise Natriumchlorid, Natriumsulfat, Kaliumchlorid oder Kalziumsulfat eingesetzt. Geeignete Salze können sowohl einzeln als auch in Kombinationen untereinander Verwendung finden. Der Anteil des wasserlöslichen Salzes an der gebrauchsfertigen Beschichtungsmasse beträgt bei Verwendung einer nichtwässrigen Trägerflüssigkeit im Allgemeinen 10 bis 90 Gew.-%, bevorzugt 20 bis 50 Gew.-%, besonders bevorzugt 30 bis 40 Gew.-%. Kommt das Salz in Form einer übersättigten wässrigen Lösung zum Einsatz, so liegt sein Gehalt in der Beschichtungsmasse naturgemäß etwas höher, d.h. in der Regel so, dass das Löslichkeitsprodukt des entsprechenden Salzes überschritten wird.

Im Hinblick auf eine ausreichende Oberflächenglätte des Kerns weisen die wasserlöslichen Salzpartikel je nach Anwendungsbereich des Gussstückes im Allgemeinen mittlere Korngrößen von mehr alls 0,1 µm, bevorzugt mehr als 1 µm und besonders bevorzugt mehr als 5 oder 10 µm auf. Die Obergrenze für die Korngröße liegt im Allgemeinen bei 500 µm, bevorzugt bei 250 µm und besonders bevorzugt bei 100 µm. Zum Erreichen der notwendigen Korngrößen kann ein Pulverisierungsschritt, beispielsweise durch Vermahlen des Salzes, notwendig sein.

Um ein zügiges Entfernen der Reste der Beschichtungsmasse während des Entkernens zu gewährleisten, sollte das als Füllstoff eingesetzte Salz bevorzugt eine Löslichkeit von mindestens 10 g/l in Wasser besitzen. Besonders bevorzugt werden Salze eingesetzt, deren Wasserlöslichkeit einen Wert von 50 g/l, 100 g/l oder sogar 200 g/l übersteigt.

Neben dem wasserlöslichen Salz umfasst die erfindungsgemäße Beschichtungsmasse weitere essentielle und fakultative Bestandteile, wie sie in herkömmlichen Schlichten für Gießereikerne, insbesondere Salzkerne, bereits zum Einsatz kommen. So enthält die gebrauchsfertige Masse eine Trägerflüssigkeit, wobei es sich im Hinblick auf die Wasslöslichkeit des Füllstoffes um eine organische Flüssigkeit handeln kann. Bevorzugt werden hier Alkohole, wie Methanol, Ethanol, Isopropanol, n-Propanol, oder Butanol, Kohlenwasserstoffe oder Kohlenwasserstoffgemische wie Leichtbenzin, Benzine des mittleren Siedebereiches, gegebenenfalls mit aromatischen Anteilen, oder Kerosin, polare aprotische Lösungsmittel wie Ketone oder Ether, beispielsweise Aceton, Methylethylketon, Ethylenglycolmono- und dialkylether, verwendet. Falls gewünscht, können die erfindungsgemäßen Beschichtungssysteme auch auf rein wässriger Basis zur Verfügung gestellt werden, in denen der Salzanteil oberhalb der Löslichkeitsgrenze des Salzes bei der gewünschten Einsatztemperatur liegt.

Für ihren Einsatz in der Gießereitechnik umfassen die erfindungsgemäßen Beschichtungsmassen ein Bindemittel, das dazu dient, eine Abbinden der Inhaltsstoffe der Beschichtungsmasse zu gewährleisten und einen abriebfesten Überzug zur Verfügung zu stellen. Vorzugsweise werden hier temporäre Bindemittel eingesetzt, die ihre Bindekraft nur in einem begrenzten Temperaturbereich zeigen und sich bei der Temperatur des flüssigen Metalls zersetzen. Solche Bindemittel, die beispielsweise Temperaturen bis etwa 400°C standhalten müssen daher zur Verwendung im Rahmen der vorliegenden Erfindung nicht notwendigerweise selbst wasserlöslich sein. Typische Beispiele für geeignete temporäre Bindemittel sind Phenolharze, wie Novolak, Resol, Polyamide, Polivinylbutyral, Polyvinylalkohol, Ethylcellulose oder Naturharze wie Kollophonium oder Wurzelharz.

Erfindungsgemäße Beschichtungsmassen können neben den wasserlöslichen Salzen noch weitere wasserlösliche oder auch nicht wasserlösliche Füllstoffe enthalten. Allerdings liegt die Korngröße nicht wasserlöslicher Füllstoffe bevorzugt in einem Bereich, in dem eine Beeinträchtigung der Oberfläche des Gussteils weitgehend vermieden werden kann, d.h. im Allgemeinen im unteren µm- oder sogar nm-Bereich. Schließlich können die erfindungsgemäßen Beschichtungsmassen weitere konventionelle Zusätze, wie beispielsweise Suspensionsmittel, Netz- und Dispergiermittel, Stellmittel und/oder rheologische Additive umfassen.

Für den kommerziellen Vertrieb kann die erfindungsgemäße Beschichtungsmasse als fertig formulierte Beschichtungsmasse, einschließlich der Trägerflüssigkeit, ausgeliefert werden. Weiterhin kann sie in pastöser Form vertrieben werden. Zur Bereitstellung einer gebrauchsfertigen Beschichtungsmasse muss in diesem Fall eine geeignete Menge an Trägerflüssigkeit zugegeben werden, die nötig ist, um die erforderlichen Viskositäts- und Dichteeigenschaften der Masse einzustellen. Ferner kann die Beschichtungsmasse als pulverförmiges Feststoffgemisch vertrieben werden, zu welchem bei der Herstellung einer gebrauchsfertigen Schlichte die erforderliche Menge an Trägerflüssigkeit zugegeben werden muss.

Die erfindungsgemäße Beschichtungsmasse umfasst im gebrauchsfertigen Zustand in der Trägerflüssigkeit im Allgemeinen einen Feststoffgehalt zwischen 10 und 60 Gew.-%, bevorzugt zwischen 20 und 50 Gew.-%, besonders bevorzugt zwischen 30 und 45 Gew.-%.

Ein beispielhaftes Verfahren zum Beschichten eines Salzkerns mit einer erfindungsgemäßen Beschichtungsmasse umfasst die Schritte des
a) Bereitstellens der Beschichtungsmasse;
b) Aufbringens der Beschichtungsmasse auf den Salzkern; und
c) Trocknen des beschichteten Salzkerns.

Das Aufbringen einer bereitgestellten erfindungsgemäßen Beschichtungsmasse kann mittels verschiedener bekannter Verfahren erfolgen. Beispiele sind Tauchen, Fluten, Sprühen und Streichen. Besonders bevorzugt ist das Aufbringen durch Tauchverfahren.

Die Zeit, die das Ablaufen der überschüssigen Beschichtungsmasse in Anspruch nimmt, richtet sich nach dem Ablaufverhalten der verwendeten Beschichtungsmasse. Nach einer ausreichenden Ablaufzeit wird der beschichtete poröse Körper einer Trocknung unterzogen. Als Trocknungsverfahren können alle bekannten Verfahren, wie beispielsweise Trocknen mit Mikrowellen oder im Konvektionsofen, angewendet werden. In einer bevorzugten Ausführungsform der Erfindung wird der beschichtete Körper bei 100 bis 250°C, besonders bevorzugt bei 120 bis 180°C, in einem Konvektionsofen getrocknet.

Die Erfindung wird durch die folgenden Beispiele weiter erläutert. Soweit nicht gesondert angegeben, beziehen sich die Mengenangaben auf Gewichtsteile.

### Beispiele

### Beispiel 1

Eine Beschichtungsmasse der folgenden Zusammensetzung wurde mittels Tauchverfahren auf einen Salzkern aufgebracht.

| | |
|---|---|
| Isopropanol | 58,5 |
| Testbenzin | 2,0 |
| Tixogel MPZ® | 2,2 |
| Aceton | 1,2 |
| Kollophoniumharzlsg., ca. 40 %ig | 1,3 |
| Natriumchlorid, mittlere Teilchengröße 30µm | 34,5 |

Die Schlichte zeigte gute Taucheigenschaften auf dem Salzkern ohne Tropfen- oder Gardinenbildung. Sie ergab sowohl nach Lufttrocknung als auch nach Trocknung im Umluft-Trockenofen einen gleichmäßigen Überzug.

### Beispiel 2

Eine Beschichtungsmasse analog Beispiel 1, jedoch mit Kaliumsulfat anstelle von Natriumchlorid hergestellt, ergab ebenfalls einen gleichmäßigen Überzug auf dem Salzkern, der als Probenstück verwendet wurde.

## Patentansprüche

1. Beschichtungsmasse für Gusskerne, umfassend mindestens ein wasserlösliches Salz als partikulären Füllstoff, sowie eine Trägerflüssigkeit und ein Bindemittel.

2. Beschichtungsmasse nach Anspruch 1, wobei die mittlere Konigröβe des wasserlöslichen Salzes zwischen 0,1 µm und 500 µm liegt.

3. Beschichtungsmasse nach einem der Ansprüche 1 oder 2, wobei das wasserlösliche Salz mindestens ein Kation umfasst, ausgewählt aus den Kationen der Metalle Natrium, Kalium. Calcium, Magnesium, Eisen oder Aluminium.

4. Beschichtungsmasse nach einem der Ansprüche 1 bis 3, wobei das wasserlösliche Salz ein Anion umfasst, ausgewählt aus einem Sulfat-, Halogenid-, Nitrat-, Phosphat-,
Carbonat-, Acetat-, Formiat oder Citratanion.

5. Verfahren zur Beschichtung eines Gusskerns, umfassend das Aufbringen einer Beschichtungsmasse nach einem der Ansprüche 1 bis 4 auf den Kern.

6. Verfahren nacht Anspruch 5, wobei es sich bei dem Gusskern um einen Salzkern handelt.

7. Verfahren nach Anspruch 5, wobei es sich bei dem Gusskern um einen Sandkern handelt.

8. Verwendung einer Beschichtungsmasse nach einem der Ansprüche 1 bis 4 als Schlichte auf einem Gusskern bei der Herstellung gegossener oder spritzgegossener Metall- oder Kunststoffteile.

9. Beschichteter Gusskern, erhältlich durch ein Verfahren das das Auftragen der Beschichtungsmasse nach einem der Ansprüche 1 bis 4 auf den Gusskern umfasst

## Claims

1. Coating material for casting cores comprising at least one water-soluble salt as particulate filler as well as a carrier liquid and a binder.

2. Coating material according to claim 1, wherein the average particle size of the water-soluble salt is between 0.1 µm and 500 µm.

3. Coating material according to one of claims 1 or 2, wherein the water-soluble salt comprises at least one cation selected from the cations of the metals sodium, potassium, calcium, magnesium, iron or aluminum.

4. Coating material according to one of claims 1 to 3; wherein the water-soluble salt comprises an anion selected from a sulfate, halide, nitrate, phosphate, carbonate, acetate, formate or citrate anion.

5. Process for coating a casting core, comprising applying a coating material according to one of claims 1 to 4 to the core.

6. Process according to claim 5, wherein the casting core is a salt core.

7. Process according to claim 5, wherein the casting core is a sand core.

8. Use of a coating material according to one of claims 1 to 4 as a coating on a casting core for the manufacture of casted or injection-molded metal or plastic parts.

9. Coated casting core obtainable by a process comprising applying of the coating material according to one of claims 1 to 4 onto the casting core.

## Revendications

1. Matière de revêtement pour des noyaux de coulée, comprenant au moins un sel hydrosoluble sous forme de charge particulaire ainsi qu'un liquide support et un liant.

2. Matière de revêtement selon la revendication 1, dans laquelle la granulométrie moyenne du sel hydrosoluble se situe entre 0,1 µm et 500 µm.

3. Matière de revêtement selon l'une des revendications 1 ou 2, dans laquelle le sel hydrosoluble comprend au moins un cation choisi parmi les cations des métaux sodium, potassium, calcium, magnésium, fer ou aluminium.

4. Matière de revêtement selon l'une des revendications 1 à 3, dans laquelle le sel hydrosoluble comprend un anion choisi parmi un anion de sulfate, d'halogénure, de nitrate, de phosphate, de carbonate, d'acétate, de formiate ou de citrate.

5. Procédé de revêtement d'un noyau de coulée, comprenant le dépôt d'une matière de revêtement selon l'une des revendications 1 à 4 sur le noyau.

6. Procédé selon la revendication 5, dans lequel le noyau de coulée est un noyau de sel.

7. Procédé selon la revendication 5, dans lequel le noyau de coulée est un noyau de sable.

8. Utilisation d'une matière de revêtement selon l'une des revendications 1 à 4 sous la forme de couches sur un noyau de coulée lors de la fabrication de pièces en métal ou en plastique coulées ou moulées par injection.

9. Noyau de coulée revêtu, pouvant être obtenu par un procédé comprenant l'application de la matière de revêtement selon l'une des revendications 1 à 4 sur le noyau de coulée.
